# EUROPEAN PATENT SPECIFICATION

(11) **EP 1 727 312 B1**
(45) Date of publication and mention of the grant of the patent: **23.05.2018**
(21) Application number: 05706649.0
(22) Date of filing: 23.02.2005
(51) Int. Cl.: H04W 28/08, H04L 12/801, H04W 84/12, H04W 88/08

(54) **A METHOD FOR ACHIEVING LOAD BALANCE BETWEEN ACCESS POINT DEVICES IN THE WIRELESS LOCAL AREA NETWORK**
VERFAHREN ZUM ERREICHEN EINES LASTAUSGLEICHS ZWISCHEN ZUGANGSPUNKTVORRICHTUNGEN IN DRAHTLOSEN LOKALEN NETZWERKEN
PROCEDE D'EQUILIBRAGE DES CHARGES ENTRE DES POINT D'ACCES DANS UN RESEAU LOCAL SANS FIL

(30) Priority: 10.03.2004 CN 200410008410
(43) Date of publication of application: 29.11.2006
(73) Proprietor: ZTE Corporation, 518057 Shenzhen City, Guangdong Province (CN)
(72) Inventor: WANG, Zhanli, ZTE Plaza, Keji Road South, 518057 Shenzhen, Guangdong Province (CN); WANG, Wei, ZTE Plaza, Keji Road South, 518057 Shenzhen, Guangdong Province (CN); LI, Haiyun, ZTE Plaza, Keji Road South, 518057 Shenzhen, Guangdong Province (CN)
(74) Representative: Nony
(86) International application number: PCT/CN2005/000213
(87) International publication number: WO 2005/086420

(56) References cited:
- EP-A1- 1 156 623
- US-A1- 2003 087 645
- US-A1- 2003 134 642
- US-A1- 2003 139 197
- US-A1- 2003 206 531
- US-A1- 2004 039 817
- US-A1- 2004 105 416
- US-A1- 2004 199 668

## Description

### TECHNICAL FIELD

The present invention relates to a method for achieving load balance between access point devices in a wireless local area network, and more particularly, to a method for achieving load balance between access point devices in a wireless local area network during networking in the field of communication.

### BACKGROUND OF THE INVENTION

In a wireless local area network (WLAN) conforming to IEEE802.11 standards, wireless connection service is provided to a plurality of mobile wireless stations (STA) through multiple access points (APs). For instance, in a building, multiple access points are arranged at each crucial location while a STA which may move randomly in the building can be connected to any one of the access points (APs). However, the STA is actually connected to the most favorable AP that has the strongest Beacon Frame signal strength among all the access points. However, as more STAs join into the wireless local area network, each AP will have different traffic load. The APs that have relatively more STAs connected to will become overloaded so as to degrade the running efficiency. Therefore, the traffic load of each AP needs to be regulated to make efficient use of the AP resources and to release network jamming.

In prior art, following methods are usually applied to regulate network load of each AP:
(1) Beacon Frames are transmitted from APs to STAs within the valid area covered by the APs, and simultaneously loading level messages are broadcasted from APs to the STAs. To which AP the STA will get access shall be decided based on the received Beacon Frame signal strength as well as the loading level messages;
(2) The access of a STA is either allowed or refused by an AP according to the AP's loading level as well as whether the STA can be associated with other AP. An instruction message showing that the STA can be associated with other AP is transmitted from the STA to the AP, while whether the STA is allowed or refused to connect to the AP shall be decided based on the AP's loading level;
(3) The loading level of each AP is monitored by a service controller so as to control the STA connect to a certain AP.

However, it should be noted that there are following disadvantages existing in the above-mentioned methods.

In the method (1) and (2), both the loading level messages transmitted from the AP to the STA and the instruction messages showing that the STA can be associated with other AP transmitted from the STA to the AP are nonstandard information. Therefore, these two methods can only be applied to such specific STAs and APs that can support or identify the above-mentioned information; thereby the application of the STA will be limited to certain extent. In the method (3), an additional service controller needs to be used for controlling the loading level of AP, which increases the cost of network and also reduces the networking flexibility.

US 2003/206531 A1 discloses CDMA messaging between wireless LAN access points.

### SUMMARY OF THE INVENTION

The technical problem to be solved by the present invention is to provide a method for achieving load balance between access point devices in a wireless local area network. The method of the present invention overcomes the defects of the prior art. In the prior art, the achieving of the load balancing depends on the control of an external service controller of AP or the method can only be applied to specific STA user groups. The method of the present invention also solves the problem of achieving the dynamic load balancing between the access points by utilizing the valid resource efficiently.

To achieve the above-mentioned object, a method as defined in claim 1 for achieving load balance between access point devices in a wireless local area network is provided according to the present invention. The method is applicable for a wireless local area network in which wireless connection service is provided through multiple access points to a plurality of mobile wireless stations. The method comprises the following steps:
electing a master access point from said multiple access points by the manner of exchanging messages among said multiple access points, wherein the rest of said multiple access points being set as slave access point;
connecting a mobile wireless station desired to be connected exclusively to said elected master access point.

Aforementioned method, characterized in that said manner of exchanging messages comprises the manner of exchanging loading level messages among said multiple access points.

Aforementioned method, characterized in that said step of electing a master access point comprises electing the access point with a lowest loading level as the master access point.

Aforementioned method, characterized in that said message exchanged includes a priority identifier used for identifying the priority of said multiple access points.

Aforementioned method, characterized in that said step of electing a master access point further comprises:
judging whether the number of said access point with a lowest loading level is more than one; if so, the access point with the highest priority is elected as the unique master access point.

Aforementioned method, characterized in that the step of electing a master access point further comprises:
each of said multiple access points refusing the access of said mobile wireless station to be connected before the master access point being elected;
said each of the multiple access points transmitting loading level messages to other access points in the wireless local area network and receiving loading level messages from said other access points during the time period when said each of the multiple access points is in the state of electing the master access point;
said each of the multiple access points comparing its loading level with loading level of other access points; if the loading level of at least one of said other access points is lower than that of said each of the multiple access points, or the loading level of at least one of said other access points is equal to that of said each of the multiple access points and its priority is higher than that of said each of multiple access point, then said each of multiple access points being set as a slave access point the loading level messages of which is no longer transmitted ; otherwise, said each of multiple access points being set as the master access point.

Aforementioned method, characterized in that the step of electing a master access point further comprises:
said elected master access point transmitting its loading level messages and receiving loading level messages transmitted from other access points in the wireless local area network;
said elected master access point being set as a slave access point, if there exists other access point with a loading level lower than that of said elected master access point, or there exists other access point with a loading level equal to that of said master access point and its priority is higher than that of said elected master access point.

Aforementioned method, characterized in that the step of electing a master access point further comprises:
monitoring the loading level of said elected master access point through the manner of self-monitoring;
initiating an election for selecting a new master access point, if the loading level of said master access point is detected increasing.

Aforementioned method, characterized in that the step of electing a master access point further comprises:
said slave access point self checking its own loading level and receiving loading level messages transmitted from said master access point;
comparing the loading level of said slave access point with that of said elected master access point;
initiating an election for selecting a new master access point, if the loading level of said slave access point is lower than that of said elected master access point, or the loading level of said elected slave access point is equal to that of said master access point and its priority is higher than that of said elected master access point.

Aforementioned method, characterized in that the step of electing a master access point further comprises:
receiving loading level messages transmitted from other access points in the wireless local area network through said slave access point;
comparing the loading level of said elected master access points with that of said other access points;
setting one access point the loading level of which is lower than that of said elected master access point, or the loading level of which is equal to that of said master access point and its priority is higher than that of said elected master access point from said other access points as the new master access point.

Aforementioned method, characterized in that the step of electing a master access point further comprises:
detecting the operation state of said elected master access point through said slave access point;
initiating an election for selecting a new master access point, if said elected master access point is determined to be in the state of abnormity.

Aforementioned method, characterized in that said elected master access point is determined to be in the state of abnormity if the loading level messages from said elected master access point is not received by said slave access point during the time period when said slave access point is in the state of detecting the abnormity of said master access point.

Aforementioned method, characterized in that the method further comprises:
initiating an election for selecting a new master access point when an additional access point joins into the local wireless network and/or when said mobile wireless station desired to be connected completes its connecting to said elected master access point.

Aforementioned method, characterized in that a timer is set to define the period when said each of the multiple access points is in the state of electing the master access point.

The method according to the present invention is applicable for all STAs conforming to the IEEE802.11 standard due to the fact that there is no need to exchange loading level messages between AP and STA. Furthermore, an additional service controller is no longer necessary to be used for controlling the access of STA because the loading level messages are only exchanged among Aps, and the access of STA is controlled spontaneously by the APs. A significant progress has been made in respect of achieving dynamic load balance among APs according to the present invention. Besides, according to the present invention load balance can be achieved during wireless connection service is provided to various STAs conforming to IEEE802.11 standard through multiple APs. Therefore, an additional service controller is unnecessary during networking according to the method of the present invention, which reduces the networking cost and increases the networking flexibility, accordingly.

### BRIEF DESCRIPTION OF THE DRAWINGS

Fig.1 is a schematic view illustrating the application of the load balance between APs according to the present invention;
Fig.2 is a flowchart of electing a master AP according to the present invention;
Fig.3 is a processing flowchart of the master AP according to the present invention;
Fig.4 is a processing flowchart of the slave AP according to the present invention.

### DESCRIPTION OF PREFERRED EMBODIMENTS

The present invention will be described in detail hereinafter with reference to the accompanying drawings and embodiments.

The present invention is especially applicable for a wireless local area network, in which wireless connection service is provided to a plurality of STAs through multiple APs, the signal strength of any pair of STA and connected AP is close to each other, and each STA can be connected to any one of the APs freely.

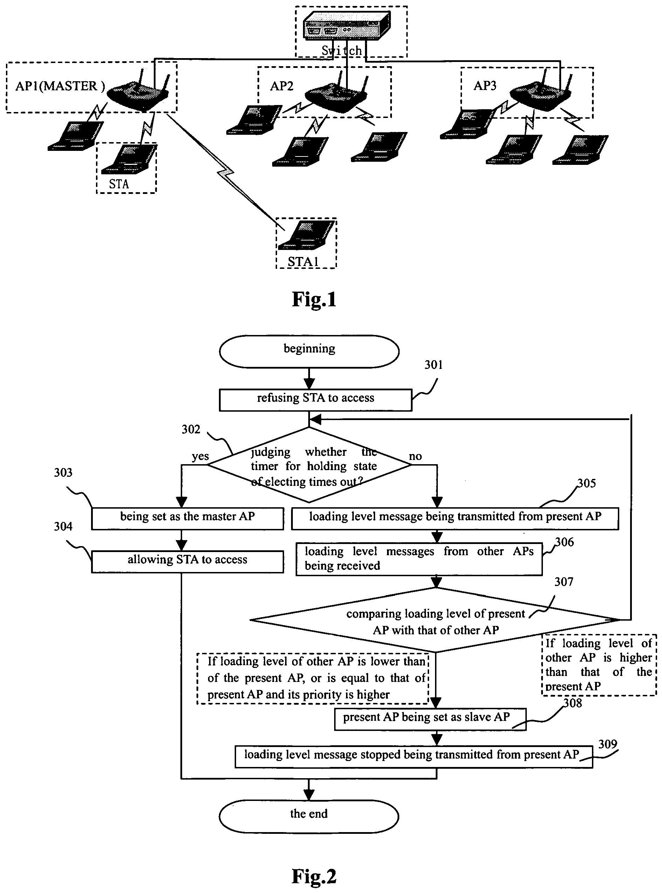

As shown in Fig.1, the load is balanced according to the number of the users that are connected to each AP. In Fig.1, API, AP2 and AP3 are connected to a same Ethernet switch, and a plurality of STAs is connected to API, AP2, and AP3 respectively. Election among APs is made so as to find out the AP with the least number of STAs connected to, which is then set as the master AP. In Fig.1, AP1 has the least number of STAs connected to and is set as the master AP, while AP2 and AP3 are set as slave APs. Therefore, the master AP1 continue to allow other STAs to access, while AP2 and AP3 refuse other STAs to access. An additional mobile wireless station (STA1) that newly joins into the specific wireless local area network shown in Fig.1 can only be connected to API. After the connecting of STA1 with API is completed, a new election will be initiated again for electing a new master AP among API, AP2 and AP3. If the number of the access points with the lowest loading level are no less than two, then one AP will be elected as the unique master AP by comparing the pre-configured priority of each AP.

Hereinafter, detailed description for implementing the method will be given.

1, The data message format of the loading level message exchanged between APs is shown in the following table, and the meaning of each field of the message is as follows.

The "version" field, with the length of 1 byte, indicates the version of the load balancing solution.

The "command" field, with the length of 1 byte, indicates the specific function of the message.

The" message identifier" field, with the length of 2 bytes, is useful for matching the request and response. The value of the identifier field of the received message needs to be copied to the identifier field of the response message by the response message. The identifier field will be neglected when a non-response message is received.

The "message length" field, with the length of 2 bytes, indicates the length of the entire message that comprises the version field, the command field, the message identifier field, the message length field, as well as the following fields.

The "sub-command" field, with the length of 1 byte, indicates the sub-function of the loading level message.

The" load balancing policy" field, with the length of 1 byte, indicates the policy adopted in load balancing, such as policy according to the number of the wireless stations, policy according to the data traffic and so on.

| Message Field | Length |
|---|---|
| version | 1 |
| command | 1 |
| message identifier | 2 |
| message length | 2 |
| sub-command | 1 |
| load balancing policy | 1 |
| load balancing group | 2 |
| AP identifier | 8 |
| AP working mode | 1 |
| AP state | 1 |
| loading level | 4 |
| serial number | 2 |
| extended service set identifier length | 1 |
| extended service set identifier | extended service set identifier length |

The "load balancing group" field, with the length of 2 bytes, indicates the identifier of the specific AP group participating in the load balancing.

The "AP identifier" field, with the length of 8 bytes, indicates the identifier of AP. The identifier of AP includes two parts, namely, the priority of AP and the basic service set identifier (BSSID), wherein the priority of AP occupies two bytes length.

The "AP working mode" field, with the length of 1 byte, indicates the current working mode of AP. For example, it can indicate that the AP is now working in the mode of IEEE802.11a, or IEEE802.11b or IEEE802.11g etc..

The "AP state" field, with the length of 1 byte, indicates the state of the AP from which the message is transmitted. For example, it may indicate that the AP is an AP in the state of electing, or is a slave AP or is a master AP etc..

The "loading level" field, with the length of 4 bytes, indicates the magnitude of the current loading level of the AP from which the message is transmitted.

The " serial number" field, with the length of 2 bytes, indicates the serial number of the message. The information of this field can be used by the receiver to detect the messages received repeatedly in a short period of time and also can be used to avoid receiving messages that are older than the current message.

The "extended service set identifier length" field, with the length of 1 byte, indicates the length of the extended service set identifier.

The "extended service set identifier" field, the length of which is designated by the "extended service set length" field, indicates the extended service set identifier of the AP from which the message (ESSID) is transmitted.

Since there is no standard to support the loading level messages exchanged among APs, the exchanged messages used here are nonstandard.
2, In the beginning, four timers are set for each AP, namely, a timer for monitoring loading level, a timer for sending loading level message, a timer for holding the state of electing a master AP and a timer for detecting abnormity of the master AP.

The timing length for holding the state of electing a master AP is set to be longer than or equal to the timing length for detecting the abnormity of the master AP.

The timing length for sending the loading level message is set to be shorter than the timing length for holding the state of electing the master AP so as to make sure that the loading level messages transmitted from all the other APs can be detected within the timing length set for holding the state of electing the master AP.

The timing length for sending loading level message is set to be shorter than the timing length for detecting the abnormity of the master AP so as to make sure that the loading level messages transmitted from the master AP can be received during the master AP is normally on-line and before the timer for detecting the abnormity of the master AP times out.

The timing length set for monitoring the loading level is used to make sure that the real time loading level can be reflected correctly under different load balancing policy.

Each AP is configured with different priority. It should be noted that the priority of two APs is determined by comparing the BSSID region of the identifier field of each AP from high byte to low byte in turn if the priority regions of the identifier fields of two APs are detected to be identical.
3, The "timer for monitoring loading level " of the AP will be turned on firstly, when an AP joins in the wireless local area network shown in Fig.1, in order to monitor loading level of the present AP periodically. Then the election for electing a new master AP will be initiated. Referring to Fig.2, the processing flowchart of electing a master AP according to the present invention is shown. Step 301, at the beginning of the election, the present AP refuses a STA to access and turns on both the " timer for holding the state of electing a master AP " and the "timer for sending loading level message"; Step 302, the AP judges whether the "timer for holding the state of electing a master AP " times out; if so, the AP further judges whether it has received a loading level message indicating that there exists other access point with a loading level lower than its own loading level; if no, the AP turns to step 305, in which the loading level messages are transmitted periodically to the distribution system (DS, i.e. the wireless local area network in which this AP and other APs are located) by operating the " timer for sending loading level message ", thereby the other APs in the DS can be notified .

If the present AP has not received a loading level message indicating that there exists other access point with a loading level lower than its own loading level at the time when the "timer for holding the state of electing a master AP " times out, step 303 in which the AP is set as the master AP will be performed. In step 304, a STA is allowed to get access to the master AP from which the loading level messages continue to be sent out and notified to other APs.

In step 306, the loading level messages from other APs in the wireless local network are received by the present AP. Step 307 is performed to compare the loading level of the present AP with that of the other APs. As a result, if the loading level of the other AP being compared is lower than that of the present AP, or if the loading level of the other AP being compared is equal to that of the present AP and its priority is higher than that of the present AP, then step 308 is performed to set the present AP as a slave AP; otherwise, step 302 is performed again.

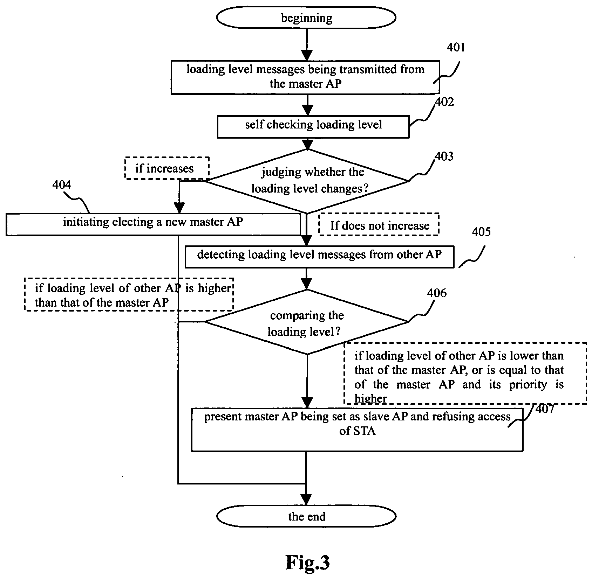

In step 309, "timer for holding the state of electing a master AP " and the " timer for sending loading level message " of the slave AP are turned off; also, the " timer for detecting the abnormity of the master AP "of the slave AP is turned on. That is, loading level messages are no longer sent out from the slave AP.
4. The processing of the master AP is shown in Fig.3.

In step 401, the loading level message is transmitted from the master AP so that the loading level of the master AP can be notified to other APs.

In step 402, the loading level of the master AP is detected in a manner of self checking by operating the " timer for monitoring the loading level " .

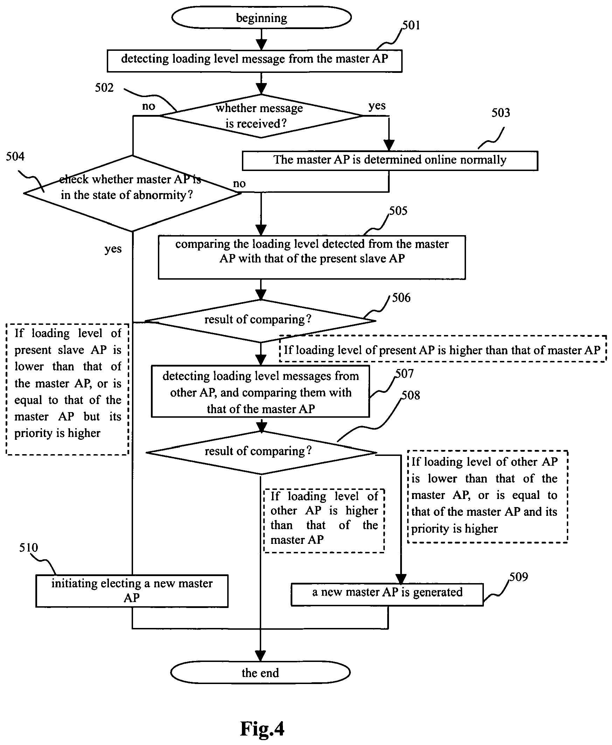

Step 403 is performed to judge whether the loading level of the master AP increases. If so, step 404 is performed to initiate an election for electing a new master AP ; otherwise, step 405 is performed to detect the loading level messages transmitted from other AP. When the master AP detects the loading level messages transmitted from other AP, step 406 is performed to compare the loading level of the master AP with that of said other AP. As a result, if the loading level of said other AP is lower than that of the master AP, or if the loading level of said other AP is equal to that of the master AP and its priority is higher than that of the master AP, then step 407 is performed to change the master AP into a slave AP which refuses STAs to access. Then the " timer for sending loading level message " of the resulted slave AP is turned off, while its " timer for detecting the abnormity of the master AP " is turned on.
5, The processing of a slave AP is shown in Fig.4.

In step 501, the slave AP detects the loading level messages transmitted from the master AP. In step 502, a judgment is made to determine whether the loading level messages transmitted from the master AP is received. In step 503, if the loading level messages transmitted from the master AP is received before the " timer for detecting the abnormity of the master AP " times out then it's determined that the master AP is online normally. In step 504, if the loading level messages transmitted from the master AP is not received after the " timer for detecting the abnormity of the master AP " times out, then it's determined that the master AP is in the state of abnormity. Step 505 is performed to compare the loading level detected from the master AP with that of the present slave AP. The said loading level of the present AP is obtained by self-checking. Step 506 is performed to determine whether the loading level of the present slave AP is lower than that of the master AP, or whether the loading level of the present AP is equal to that of the master AP and its priority is higher than that of the master AP. If so, step 510 is performed to initiate an election for electing a new master AP; if no, step 507 is performed to compare the loading level messages detected from other AP with that of the master AP. Step 508 is performed to determine whether the loading level of said other AP is lower than that of the master AP, or whether the loading level of said other AP is equal to that of the master AP and its priority is higher than that of the master AP. If so, step 509 is performed to set the said other AP as the new master AP. In step 510, an election for electing a new master AP is initiated again by the slave AP.

The method according to the present invention is applicable for all STAs conforming to the IEEE802.11 standard due to that fact that there is no need to exchange loading level messages between AP and STA and the loading level messages are only exchanged among APs. Furthermore, an additional service controller is no longer necessary to be used for controlling the access of STA that is now controlled spontaneously by the APs. A significant progress has been made in respect of achieving dynamic load balance among APs according to the present invention accordingly. Besides, according to the present invention load balance can be achieved during wireless connection service is provided to various STAs conforming to IEEE802.11 standard through multiple APs.

Apparently, the present invention has other various embodiments. And it will be apparent to those skilled in the art that various modifications and variations can be made, thus it is intended that the present invention cover the modifications and variations of this invention provided they come within the scope of the appended claims and their equivalents.

### INDUSTRIAL APPLICATION

The method according to the present invention is applicable for all STAs conforming to the IEEE802.11 standard due to that fact that a master AP is elected by exchanging messages among multiple APs and there is no need to exchange loading level messages between AP and STA. Furthermore, an additional service controller is no longer necessary to be used for controlling the access of STA which is now controlled spontaneously by the APs for the reason that loading level messages are only exchanged among APs. Therefore, a significant progress has been made in respect of achieving dynamic load balance among APs according to the present invention. Besides, according to the present invention load balance can be achieved during wireless connection service is provided to various STAs conforming to IEEE802.11 standard through multiple APs. The method according to the present invention reduces the networking cost and increases the networking flexibility, accordingly. The method of the present invention is applicable not only for a wireless local area network in the communication field to achieve load balancing among access points during networking, but also applicable for other fields in which similar problems exit.

## Claims

1. A method for achieving load balance between access point devices in a wireless local area network, in which wireless connecting service is provided to a plurality wireless stations through multiple access points, the method comprises following steps:
electing a master access point from said multiple access points by the manner of exchanging messages among said multiple access points, wherein the rest of said multiple access points being set as slave access point;
connecting a mobile wireless station desired to be connected exclusively to said elected master access point;
wherein said manner of exchanging messages comprises the manner of exchanging loading level messages among said multiple access points; said step of electing a master access point comprises electing the access point with a lowest loading level as the master access point.

2. The method according to claim 1, wherein said message exchanged includes a priority identifier used for identifying the priority of said multiple access points.

3. The method according to claim 2, wherein said step of electing a master access point further comprises:
judging whether the number of said access point with a lowest loading level is more than one; if so, the access point with the highest priority is elected as the unique master access point.

4. The method according to claim 3, wherein the step of electing a master access point further comprises:
each of said multiple access points refusing the access of said mobile wireless station to be connected before the master access point being elected (S301);
said each of the multiple access points transmitting loading level messages to other access points in the wireless local area network and receiving loading level messages from said other access points during the time period when said each of the multiple access points is in the state of electing the master access point (S305-S306);
said each of the multiple access points comparing its loading level with loading level of other access points (S307); if the loading level of at least one of said other access points is lower than that of said each of the multiple access points, or the loading level of at least one of said other access points is equal to that of said each of the multiple access points and its priority is higher than that of said each of multiple access point, then said each of multiple access points being set as a slave access point the loading level messages of which is no longer transmitted (S308-S309); otherwise, said each of multiple access points being set as the master access point (S303).

5. The method according to claim 4, wherein the step of electing a master access point further comprises:
said elected master access point transmitting its loading level messages (S401) and receiving loading level messages transmitted from other access points in the wireless local area network (S405);
said elected master access point being set as a slave access point, if there exists other access point with a loading level lower than that of said elected master access point, or there exists other access point with a loading level equal to that of said master access point and its priority is higher than that of said elected master access point (S407), .

6. The method according to claim 4, wherein the step of electing a master access point further comprises:
monitoring the loading level of said elected master access point through the manner of self-monitoring (S402);
initiating an election for selecting a new master access point, if the loading level of said master access point is detected increasing (S404).

7. The method according to claim 5, wherein the step of electing a master access point further comprises:
said slave access point self checking its own loading level and receiving loading level messages transmitted from said master access point;
comparing the loading level of said slave access point with that of said elected master access point(S505);
initiating an election for selecting a new master access point, if the loading level of said slave access point is lower than that of said elected master access point, or the loading level of said elected slave access point is equal to that of said master access point and its priority is higher than that of said elected master access point (S510).

8. The method according to claim 7, wherein the step of electing a master access point further comprises:
receiving loading level messages transmitted from other access points in the wireless local area network through said slave access point;
comparing the loading level of said elected master access points with that of said other access points (S507);
setting one access point the loading level of which is lower than that of said elected master access point, or the loading level of which is equal to that of said master access point and its priority is higher than that of said elected master access point from said other access points as the new master access point (509).

9. The method according to claim 7, wherein the step of electing a master access point further comprises:
detecting the operation state of said elected master access point through said slave access point (S504);
initiating an election for selecting a new master access point, if said elected master access point is determined to be in the state of abnormity (S510).

10. The method according to claim 9, wherein said elected master access point is determined to be in the state of abnormity if the loading level messages from said elected master access point is not received by said slave access point during the time period when said slave access point is in the state of detecting the abnormity of said master access point.

11. The method according to claim 4, wherein the method further comprises:
initiating an election for selecting a new master access point when an additional access point joins into the local wireless network and/or when said mobile wireless station desired to be connected completes its connecting to said elected master access point.

12. The method according to claim 4, wherein a timer is set to define the period when said each of the multiple access points is in the state of electing the master access point.

## Patentansprüche

1. Verfahren zum Erreichen eines Lastausgleichs zwischen Zugangspunktvorrichtungen in einem drahtlosen lokalen Netzwerk, in dem ein drahtloser Verbindungsdienst für mehrere drahtlose Stationen über mehrere Zugangspunkte bereitgestellt wird, wobei das Verfahren die folgenden Schritte aufweist:
Auswählen eines Master-Zugriffspunkts aus den mehreren Zugriffspunkten nach der Art und Weise des Austauschens von Nachrichten unter den mehreren Zugriffspunkten, wobei der Rest der mehreren Zugriffspunkte als Slave-Zugriffspunkt festgelegt wird;
Verbinden einer mobilen drahtlosen Station, um ausschließlich mit dem gewählten Master-Zugangspunkt verbunden zu sein;
wobei die Art und Weise des Austauschens von Nachrichten die Art und Weise des Austauschens von Lastpegel-Nachrichten unter den mehreren Zugriffspunkten aufweist; wobei der Schritt des Auswählens eines Master-Zugriffspunkts ein Auswählen des Zugriffspunkts mit einem niedrigsten Lastpegel als Master-Zugriffspunkt aufweist.

2. Verfahren nach Anspruch 1, wobei die ausgetauschte Nachricht eine Prioritätskennung enthält, die zum Identifizieren der Priorität der mehreren Zugriffspunkte verwendet wird.

3. Verfahren nach Anspruch 2, wobei der Schritt des Auswählens eines Master-Zugriffspunkts ferner aufweist:
Beurteilen, ob die Anzahl der Zugriffspunkte mit dem niedrigsten Lastpegel höher als eins ist; wenn dies der Fall ist, wird der Zugriffspunkt mit der höchsten Priorität als eindeutiger Master-Zugriffspunkt ausgewählt.

4. Verfahren nach Anspruch 3, wobei der Schritt des Auswählens eines Master-Zugriffspunkts ferner aufweist:
ein jeweiliger der mehreren Zugangspunkte verweigert den Zugang der zu verbindenden mobilen drahtlosen Station, bevor der Master-Zugangspunkt gewählt wird (S301);
wobei der jeweilige der mehreren Zugangspunkte Lastpegel-Nachrichten an andere Zugangspunkte in dem drahtlosen lokalen Netzwerk sendet und Lastpegel-Nachrichten von den anderen Zugangspunkten empfängt, während der Zeitperiode, in der sich der jeweilige der mehreren Zugangspunkte in dem Zustand des Auswählens des Master-Zugangspunkts (S305-S306) befindet;
wobei der jeweilige der mehreren Zugriffspunkte seinen Lastpegel mit dem Lastpegel anderer Zugriffspunkte (S307) vergleicht; wobei, wenn der Lastpegel von mindestens einem der anderen Zugriffspunkte niedriger ist als der von dem jeweiligen der mehreren Zugriffspunkte, oder der Lastpegel von mindestens einem der anderen Zugriffspunkte gleich dem von dem jeweiligen der mehreren Zugriffspunkte ist und seine Priorität höher als diejenige von dem jeweiligen der mehreren Zugriffspunkten ist, der jeweilige der mehreren Zugriffspunkte dann als ein Slave-Zugriffspunkt, dessen Lastpegel-Nachrichten nicht mehr gesendet werden, festgelegt wird (S308-S309); andernfalls wird der jeweilige von mehreren Zugriffspunkten als der Master-Zugriffspunkt festgelegt (S303).

5. Verfahren nach Anspruch 4, wobei der Schritt des Auswählens eines Master-Zugriffspunkts ferner aufweist:
der gewählte Master-Zugangspunkt sendet seine Lastpegel-Nachrichten (S401) und empfängt von anderen Zugangspunkten in dem drahtlosen lokalen Netzwerk gesendete Lastpegel-Nachrichten (S405);
wobei der gewählte Master-Zugriffspunkt als ein Slave-Zugriffspunkt festgelegt wird, wenn ein anderer Zugriffspunkt mit einem niedrigeren Lastpegel als der gewählte Master-Zugriffspunkt existiert oder wenn ein anderer Zugriffspunkt mit einem Lastpegel existiert, der gleich dem des Master-Zugriffspunkts ist und seine Priorität höher als die des gewählten Master-Zugriffspunkts ist (S407).

6. Verfahren nach Anspruch 4, wobei der Schritt des Auswählens eines Master-Zugriffspunkts ferner aufweist:
Überwachen des Lastpegels des gewählten Master-Zugriffspunkts auf die Selbstüberwachungsart- und Weise (S402);
Initiieren einer Wahl zum Auswählen eines neuen Master-Zugriffspunkts, wenn der Lastpegel des Master-Zugriffspunkts als ansteigend erkannt wird (S404).

7. Verfahren nach Anspruch 5, wobei der Schritt des Auswählens eines Master-Zugriffspunkts ferner aufweist:
der Slave-Zugriffspunkt prüft selbst seinen eigenen Lastpegel und empfängt Lastpegel-Nachrichten, die von dem Master-Zugriffspunkt gesendet werden;
Vergleichen des Lastpegels des Slave-Zugriffspunkts mit dem des gewählten Master-Zugriffspunkts (S505);
Initiieren einer Wahl zum Auswählen eines neuen Master-Zugriffspunkts, wenn der Lastpegel des Slave-Zugriffspunkts niedriger als der des gewählten Master-Zugriffspunkts ist oder der Lastpegel des gewählten Slave-Zugriffspunkts gleich dem des Master-Zugriffspunkts ist und seine Priorität höher als die des gewählten Master-Zugriffspunkts ist (S510).

8. Verfahren nach Anspruch 7, wobei der Schritt des Auswählens eines Master-Zugriffspunkts ferner aufweist:
Empfangen von Lastpegel-Nachrichten, die von anderen Zugangspunkten in dem drahtlosen lokalen Netzwerk durch den Slave-Zugangspunkt gesendet werden;
Vergleichen des Lastpegels der gewählten Master-Zugriffspunkte mit dem der anderen Zugriffspunkte (S507);
Festlegen eines Zugangspunkts, dessen Lastpegel niedriger ist als der des gewählten Master-Zugangspunkts oder dessen Lastpegel gleich dem des Master-Zugangspunkts ist und dessen Priorität höher als die des von den anderen Zugangspunkten gewählten Master-Zugangspunkts ist, als der neue Master-Zugangspunkt (509).

9. Verfahren nach Anspruch 7, wobei der Schritt des Auswählens eines Master-Zugriffspunkts ferner aufweist:
Erkennen des Betriebszustands des gewählten Master-Zugriffspunkts durch den Slave-Zugriffspunkt (S504);
Initiieren einer Wahl zum Auswählen eines neuen Master-Zugriffspunkts, wenn der gewählte Master-Zugriffspunkt als im Zustand der Anomalie befindlich bestimmt wird (S510).

10. Verfahren nach Anspruch 9, wobei der gewählte Master-Zugriffspunkt als im Zustand der Anomalie befindlich bestimmt wird, wenn während der Zeitperiode, in der sich der Slave-Zugriffspunkt in dem Zustand des Erkennens der Anomalie des Master-Zugriffspunkts befindet, die Lastpegel-Nachrichten von dem gewählten Master-Zugriffspunkt von dem Slave-Zugriffspunkt nicht empfangen werden.

11. Verfahren nach Anspruch 4, wobei das Verfahren ferner aufweist:
Initiieren einer Wahl zum Auswählen eines neuen Master-Zugangspunkts, wenn ein zusätzlicher Zugangspunkt in das lokale drahtlose Netzwerk eintritt und/oder wenn die zu verbindende mobile drahtlose Station ihre Verbindung mit dem gewählten Master-Zugangspunkt abschließt.

12. Verfahren nach Anspruch 4, wobei ein Zeitgeber eingestellt wird, um die Periode zu definieren, in der sich ein jeweiliger der mehreren Zugangspunkte in dem Zustand des Auswählens des Master-Zugangspunkts befindet.

## Revendications

1. Procédé pour accomplir un équilibre de charge entre des dispositifs de point d'accès dans un réseau local sans fil, dans lequel un service de connexion sans fil est fourni à une pluralité de stations sans fil par l'intermédiaire de multiples points d'accès, le procédé comprend les étapes suivantes :
le choix d'un point d'accès maître parmi lesdits multiples points d'accès par l'intermédiaire de la manière d'échanger des messages parmi lesdits multiples points d'accès, dans lequel le reste desdits multiples points d'accès sont réglés en tant que point d'accès esclave ;
la connexion d'une station sans fil mobile que l'on souhaite être connectée exclusivement audit point d'accès maître choisi ;
dans lequel ladite manière d'échanger des messages comprend la manière d'échanger des messages de niveau de chargement parmi lesdits multiples points d'accès ;
ladite étape du choix d'un point d'accès maître comprend le choix du point d'accès avec un niveau de chargement le plus bas en tant que point d'accès maître.

2. Procédé selon la revendication 1, dans lequel ledit message échangé inclut un identifiant de priorité utilisé pour identifier la priorité desdits multiples points d'accès.

3. Procédé selon la revendication 2, dans lequel ladite étape du choix d'un point d'accès maître comprend en outre :
l'évaluation que le nombre dudit point d'accès avec un niveau de chargement le plus bas est, ou n'est pas, plus d'un; dans l'affirmative, le point d'accès avec la priorité la plus élevée est choisi en tant que point d'accès maître unique.

4. Procédé selon la revendication 3, dans lequel l'étape du choix d'un point d'accès maître comprend en outre :
par chacun desdits multiples points d'accès, le refus de l'accès de ladite station sans fil mobile destinée à être connectée avant que le point d'accès maître soit choisi (S301) ;
par ledit chacun des multiples points d'accès, la transmission de messages de niveau de chargement à d'autres points d'accès dans le réseau local sans fil et la réception de messages de niveau de chargement à partir desdits autres points d'accès durant la période lorsque ledit chacun des multiples points d'accès est dans l'état du choix du point d'accès maître (S305-S306) ;
par ledit chacun des multiples points d'accès, la comparaison de son niveau de chargement au niveau de chargement d'autres points d'accès (S307) ; si le niveau de chargement d'au moins l'un desdits autres points d'accès est inférieur à celui dudit chacun des multiples points d'accès, ou le niveau de chargement d'au moins l'un desdits autres points d'accès est égal à celui dudit chacun des multiples points d'accès et sa priorité est plus élevée que celle dudit chacun des multiples points d'accès, alors le réglage dudit chacun des multiples points d'accès en tant que point d'accès esclave dont les messages de niveau de chargement ne sont plus transmis (S308-S309) ; autrement, le réglage dudit chacun de multiples points d'accès en tant que point d'accès maître (S303).

5. Procédé selon la revendication 4, dans lequel l'étape du choix d'un point d'accès maître comprend en outre :
par ledit point d'accès maître choisi, la transmission de ses messages de niveau de chargement (S401) et la réception de messages de niveau de chargement transmis à partir d'autres points d'accès dans le réseau local sans fil (S405) ;
le réglage dudit point d'accès maître choisi en tant que point d'accès esclave, s'il existe un autre point d'accès avec un niveau de chargement inférieur à celui dudit point d'accès maître choisi, ou il existe un autre point d'accès avec un niveau de chargement égal à celui dudit point d'accès maître et sa priorité est plus élevée que celle dudit point d'accès maître choisi (S407).

6. Procédé selon la revendication 4, dans lequel l'étape du choix d'un point d'accès maître comprend en outre :
la surveillance du niveau de chargement dudit point d'accès maître choisi par l'intermédiaire de la manière d'auto-surveillance (S402) ;
l'initiation d'un choix pour sélectionner un nouveau point d'accès maître, s'il est détecté que le niveau de chargement dudit point d'accès maître augmente (S404).

7. Procédé selon la revendication 5, dans lequel l'étape du choix d'un point d'accès maître comprend en outre :
par ledit point d'accès esclave, l'autocontrôle de son propre niveau de chargement et la réception de messages de niveau de chargement transmis à partir dudit point d'accès maître ;
la comparaison du niveau de chargement dudit point d'accès esclave à celui dudit point d'accès maître choisi (S505) ;
l'initiation d'un choix pour sélectionner un nouveau point d'accès maître, si le niveau de chargement dudit point d'accès esclave est inférieur à celui dudit point d'accès maître choisi, ou le niveau de chargement dudit point d'accès esclave choisi est égal à celui dudit point d'accès maître et sa priorité est plus élevée que celle dudit point d'accès maître choisi (S510).

8. Procédé selon la revendication 7, dans lequel l'étape du choix d'un point d'accès maître comprend en outre :
la réception de messages de niveau de chargement transmis à partir d'autres points d'accès dans le réseau local sans fil par l'intermédiaire dudit point d'accès esclave ;
la comparaison du niveau de chargement dudit point d'accès maître choisis à celui desdits autres points d'accès (S507) ;
le réglage d'un point d'accès dont le niveau de chargement est inférieur à celui dudit point d'accès maître choisi, ou dont le niveau de chargement est égal à celui dudit point d'accès maître et sa priorité est plus élevée que celle dudit point d'accès maître choisi parmi lesdits autres points d'accès en tant que nouveau point d'accès maître (509).

9. Procédé selon la revendication 7, dans lequel l'étape du choix d'un point d'accès maître comprend en outre :
la détection de l'état de fonctionnement dudit point d'accès maître choisi, par l'intermédiaire dudit point d'accès esclave (S504) ;
l'initiation d'un choix pour sélectionner un nouveau point d'accès maître, s'il est déterminé que ledit point d'accès maître choisi est dans l'état d'anomalie (S510).

10. Procédé selon la revendication 9, dans lequel il est déterminé que ledit point d'accès maître choisi est dans l'état d'anomalie si les messages de niveau de chargement à partir dudit point d'accès maître choisi ne sont pas reçu par ledit point d'accès esclave durant la période lorsque ledit point d'accès esclave est dans l'état de la détection de l'anomalie dudit point d'accès maître.

11. Procédé selon la revendication 4, dans lequel le procédé comprend en outre :
l'initiation d'un choix pour sélectionner un nouveau point d'accès maître lorsqu'un point d'accès supplémentaire joint le réseau sans fil local et/ou lorsque ladite station sans fil mobile que l'on souhaite être connectée achève sa connexion audit point d'accès maître choisi.

12. Procédé selon la revendication 4, dans lequel une minuterie est réglée pour définir la période lorsque ledit chacun des multiples points d'accès est dans l'état du choix du point d'accès maître.
